# EUROPEAN PATENT APPLICATION

(11) **EP 4 764 192 A1**
(43) Date of publication of application: **24.06.2026**
(21) Application number: 24220588.8
(22) Date of filing: 17.12.2024
(51) Int. Cl.: F02F 1/00

(54) **ARRANGEMENT FOR AN INTERNAL COMBUSTION ENGINE**

(71) Applicant: Innio Jenbacher GmbH & Co OG, 6200 Jenbach (AT)
(72) Inventor: FIMML, Wolfgang, 6212 Maurach in Tirol (AT); NEITELER, Robert, 6112 Wattens (AT); JONSSON, Steinbjörn, 6092 Birgitz (AT); DONAHUE, Richard, Wisconsin, 53090 (US)
(74) Representative: Torggler & Hofmann Patentanwälte - Innsbruck

(57) **Abstract**

Arrangement for an internal combustion engine comprising a chamber component (1), in particular a cylinder liner (2) and/or a crankcase (3), with a front face (4) of the chamber component (1) facing a cylinder head (5) in a mounted state of the chamber component (1) and a scraper ring (6), wherein the scraper ring (6) extends beyond the front face (4) of the chamber component (1) in the direction of the cylinder head (5).

## Description

The present disclosure concerns an arrangement of a chamber component, in particular a cylinder liner and/or a crankcase, and a scraper ring for an internal combustion engine with the features of the classifying portion of claim 1. The present disclosure further concerns an internal combustion engine with such an arrangement.

In the following the state of the art will be described by use of a cylinder liner. The same applies generally for chamber components.

The use of cylinder liners is well known in the field of internal combustion engines. It is also known to use scraper rings (or also called "anti-polishing rings") being capable of scraping off deposits from a lateral side of a piston above the piston rings.

Conventionally, anti-polishing rings or scraper rings are ring-like components which are fitted into the cylinder liner inner wall such as described in US 2021/0062753 Al.

At a front face of the cylinder liner facing a cylinder head in a mounted state of the cylinder liner in the internal combustion engine a cylinder head gasket is placed interface between the cylinder liner and the cylinder head, wherein the main combustion chamber is sealed by the gasket.

A disadvantage of such known embodiments is that between the scraper ring, the gasket and the cylinder head gabs or cracks are present (crevice volume).

Additionally, by using such a scraper ring also crevice volumes in the area of the cylinder head gasket are created. The cylinder head should not sit directly on the scraper ring, because this would lead to unfavorable mechanical stress in the cylinder liner, leading to a free space between the front face of the scraper ring and the cylinder head.

Such a free space or crevice volumes are unfavorable, since due to the varying pressure relationships during a combustion cycle, fuel gas (e.g. natural gas) is pressed into the crevice volume at high pressure conditions (compression stroke) and released as unburned fuel back into the main combustion chamber during low pressure conditions (e.g. during the exhaust stroke). This leads to an undesired release of hydrocarbon (HC) emissions into the atmosphere.

Therefore, the purpose of the present disclosure is to provide an arrangement of a chamber component, in particular a cylinder liner and/or a crankcase, and a scraper ring for an internal combustion engine, wherein HC emissions can be reduced.

This purpose is solved by an arrangement of a chamber component, in particular a cylinder liner and/or a crankcase, and a scraper ring for an internal combustion engine with the features of claim 1. The purpose is further solved by an internal combustion engine having such an arrangement.

According to an embodiment of the present disclosure the arrangement for an internal combustion engine comprises a chamber component, in particular a cylinder liner and/or a crankcase, with a front face of the chamber component facing a cylinder head in a mounted state of the chamber component and a scraper ring, wherein the scraper ring extends beyond the front face of the chamber component in direction of the cylinder head.

Formulated differently, the scraper ring is provided in such a way that it also serves as cylinder head gasket by extending beyond front face of the chamber component, wherein no recess, groove, gap or free space is present which would be in communication with the main combustion chamber or wherein such recesses, grooves, gaps or free spaces are minimised.

By the avoidance of such geometries and a separate component part the crevice volumes can be reduced or can be eliminated. The reduction or elimination of the crevice volumes reduces the unburned fuel volume because the fuel and/or air-fuel mixture supplied to the main combustion chamber cannot any more escape into cavities between the cylinder liner and the anti-polishing ring, such that more fuel is combusted by the combustion and the HC-emissions are be reduced (by reducing unburned fuel in the exhaust gas).

Already present internal combustion engines can be upgraded and operated with an arrangement according to the present disclosure. Therefore, the present disclosure can be used for the embodiments of the prior art already described in the introduction of the description.

The present disclosure can particularly preferably be used in conjunction with an internal combustion engine driving a generator for creating electrical energy. Such combinations of internal combustion engines driving a generator are known as gensets.

The internal combustion engine or genset can preferably be stationary or for naval use.

The chamber component can be understood as the component or group of components for an internal combustion engine which make up a lateral wall of a main combustion chamber, such as a cylinder. In many internal combustion engines the lateral wall of the main combustion chamber, in particular cylinder wall, is formed by the crankcase itself or a cylinder liner disposed in the crankcase. Mixed embodiments or embodiments with several distinct parts making up the lateral wall of the main combustion chamber are of course conceivable. If the lateral wall is made up of a plurality of component parts, this group of components collectively can be understood as the chamber component. The at least one head gasket can optionally be part of this group.

The internal combustion engine can comprise separate crankcases and/or cylinder heads for each of the cylinders. Combined crankcases and/or cylinder heads for each bank of cylinders and/or all cylinders are of course conceivable. Independently thereof the assembly according to the present disclosure can be realised in one, a plurality, or preferably all of the cylinders of the internal combustion engine.

The internal combustion engine can preferably be configured to combust natural gas and/or molecular hydrogen as fuel. Of course, other fuels, such as methane or generally mixtures containing hydrocarbons.

Advantageous embodiments of the invention are defined in the dependent claims.

The scraper ring can comprise a shoulder extending along the front face of the chamber component, wherein the shoulder protrudes along the front face of the chamber component forming at least a part of a cylinder head gasket.

It can be provided that the scraper rind and /or shoulder protrudes from the front face of the chamber component parallel to a middle axis of the chamber component by between 1mm to 10mm, preferably between 2mm to 7mm, particular preferably 3mm to 6mm.

It can be provided that the chamber component comprises a circumferential recess at the front face of the chamber component facing a cylinder head in a mounted state of the chamber component, wherein the scraper ring is arranged in the circumferential recess of the chamber component.

The shoulder can be provided with a first clearance, wherein the shoulder is at least partially distanced from the front face of the chamber component by the first clearance, preferably in a region of a transition of the front face into the circumferential recess for the scraper ring.

It can be provided that the scraper ring comprises a second clearance, wherein the scraper ring is at least partially distanced from the circumferential recess of the chamber component by the second clearance, preferably in the region of a transition of the front face into the circumferential recess for the scraper ring.

It can be provided that the first clearance transitions directly into the second clearance by a transition radius, preferably wherein the transition radius is provided by a radius of 0, 5mm to 1mm.

The first clearance and/or the second clearance can provide a distance between the chamber component and the scraper ring between 0,1mm and 0,3mm, preferably 0,2mm, measured orthogonal to the displaced surfaces.

It can be provided that the scraper ring is connected to the chamber component, preferably arranged in the circumferential recess, with a press fit.

The chamber component can be provided with an inner wall around a middle axis of the chamber component having a diameter forming at least partly a gliding surface for a reciprocating piston with at least one piston ring during operation of the internal combustion engine.

It can be provided that the scraper ring comprises a scraper wall having a smaller diameter than the inner wall of the chamber component.

Between the shoulder of the scraper ring and the front face of the chamber component at least one sealing element can be provided, preferably a gasket and/or an O-ring, is provided.

It can be provided that at least one head gasket is arranged between the cylinder head gasket and the cylinder head, wherein the at least one head gasket comprises a cavity, which cavity is closed at least towards a main combustion chamber.

Because of the deformed head gasket and cavity the at least one head gasket is imbued not only with an elasticity, but also a larger spring back effect such that the mentioned gaps between the various components surrounding the combustion chamber do not form in the first place because the at least one head gasket comprising the cavity simply expands again elastically. Formulated differently, the larger spring back effect means that the head gasket with a cavity can expand much further than a head gasket according to the prior art. In short, the at least one head gasket comprising the cavity according to the present disclosure can prevent said dead volumes at least partially.

Analysis carried out by the applicant has surprisingly shown that the amount of emissions in the form of unburnt fuel can in this way be decreased by 20% or more.

It should be noted that decreasing the amount of unburnt fuel automatically results in an increase of the efficiency of the internal combustion engine since the previously unburnt fuel does get combusted according to the present disclosure.

That the cavity of the head gasket is closed at least towards the main combustion chamber can be understood such that any measurable or relevant fluid communication between the main combustion chamber and the cavity is prevented. However, in some embodiments the cavity may be in fluid communication with the environment. In preferred embodiments the cavity is completely closed.

The at least one head gasket comprising the cavity may preferably be made from steel.

Since for example steel has a higher resistance to thermal loads than most elastomeric materials head gaskets from steel can be placed closer to the combustion chamber such that gaps and the like which would cause unburned fuel can be minimised.

It is possible to have more than one head gasket with one or more cavities (each). Such embodiments allow for a particularly secure seal between the cylinder head and the cylinder head gasket and/or cylinder liner and/or scraper ring.

It is furthermore possible to have two or more head gaskets with a cavity each, wherein the respective cavities are in fluid communication with each other.

The at least one head gasket comprising a cavity can be easily implemented, independently of which type of cylinder liner concept (bottom stop, mid stop, top stop; wet liner, dry liner) is preferred for the particular engine.

As mentioned, in particularly preferred embodiments the cavity of the head gasket is completely closed. In other words, the cavity comprised in the at least one head gasket forms a separate volume which is not in fluid communication with the combustion chamber or the environment or any other separate volumes. Such embodiments can be particularly preferred as they are particularly easy to manufacture or effective in preventing unburnt fuel, in particular unburnt hydrocarbons.

In other embodiments a cross section of the at least one head gasket comprising the cavity could for example have a base shape of a C with the open side of the C facing away from the combustion chamber.

The at least one head gasket can preferably have an annular structure. In this way the at least one head gasket comprising the cavity can in a simple way azimuthally cover the interface between the cylinder head gasket completely.

The cross-section of the at least one head gasket in an unloaded state can particularly preferably be substantially annular which constitutes a particularly simple embodiment wherein the cavity is completely closed.

A cross-section of the cavity of the at least one head gasket may in simple embodiments and in an unloaded state be substantially circular.

In particularly preferred embodiments the cavity can be filled with a pressurised gas. Such embodiments may be particularly preferred as the pressure of the gas can be used to adjust the spring rate of the at least one head gasket comprising the cavity precisely as intended. It can in particular be adjusted so that on the one hand the pre-load of the cylinder head onto the chamber component reliably deforms the at least one head gasket as desired to achieve the correct geometry, e.g., of the combustion chamber, and on the other hand the effect of the at least one head gasket comprising the cavity of sealing dead volumes is optimised.

Annular rings with a closed cavity filled with a pressurised gas are particularly preferred embodiments to be used as the at least one head gasket according to the present disclosure. Such gaskets are in and of themselves known as Willis Rings in the prior art.

As far as the applicant is aware such Willis Rings have however never been considered as head gaskets for internal combustion engines, in particular stationary internal combustion engines configured to drive generators for creating electric energy (gensets).

The pressurised gas can particularly preferably be an inert gas, e.g., molecular nitrogen.

The pressure of the gas in the cavity can for example be between 30bar and 110bar, preferably between 50bar and 90bar and particularly preferably between 60bar and 80bar. Analysis carried out by the applicant has shown that in these pressure regions there can on the one hand be an ideal deformation of the gasket and on the other hand sufficient pre-load for minimising unburnt fuel.

The at least one head gasket comprising the cavity can be arranged on an inner side of the chamber component, preferably the cylinder liner, facing the combustion chamber.

A distance of the at least one head gasket comprising the cavity according to this disclosure can preferably be less than a diameter of the at least one head gasket comprising the cavity.

The closer the at least one head gasket comprising the cavity is to the combustion chamber the less dead volume will be present.

Particularly preferably, the at least one head gasket comprising the cavity can be part of an inner wall of the combustion chamber. In such preferred embodiments the presence of dead volumes in the region of the head gasket can be virtually excluded.

The chamber component, in particular the crankcase and/or the cylinder liner, can particularly preferably comprise a deepened structure, preferably in the form of a recess and/or a channel, in which the at least one head gasket comprising the cavity is arranged. The at least one head gasket comprising the cavity can in this way be integrated into the assembly in a particularly simple and easy-to-manufacture way.

The main combustion chamber can particularly preferably have a lateral inner wall which is substantially of cylindrical shape.

Instead of the at least one head gasket comprising a cavity it is also possible to use an elastomeric O-ring.

Elastomeric O-rings can also deform in relatively large amounts and - surprisingly - there are O-rings which are rated for the temperatures that occur in the vicinity of the combustion chamber in an internal combustion engine.

Elastomeric O-rings and head gaskets comprising a cavity can also be combined, both in the sense that there is at least one head gasket with a cavity and there is at least one elastomeric O-ring as head gasket, and in the sense that the at least one O-ring comprises a cavity.

In preferred embodiments the at least one O-ring is made of full material, i.e., the at least one O-ring does not comprise cavity.

In preferred embodiments the at least one O-ring is made from a fluoroelastomer. In particularly preferred embodiments the fluoroelastomer is an FKM (Fluorine Kautschuk Material) and/or FFKM (both defined in ISO/DIN 1629). These materials exhibit very strong resistance to thermal loads and are therefore particularly useful in the vicinity of combustion chambers of internal combustion engines.

In particularly preferred embodiments a distance of the at least one head gasket in the form of at least one O-ring from the combustion chamber is less than a diameter of the at least one O-ring, particularly preferably less than half a diameter of the at least one O-ring.

Furthermore, protection is sought for an internal combustion engine comprising an arrangement according to the present disclosure, preferably wherein a piston is arranged inside the chamber component and a cylinder head is preloaded against the chamber component via the scraper ring.

Further details and advantages of the present disclosure are apparent from the accompanying figures and the following description of the drawings. The figures show:
- Fig. 1: a first embodiment of the present disclosure,
- Fig. 2: the detail A indicated in Fig. 1,
- Fig. 3: a second embodiment of the present disclosure,
- Fig. 4: the detail B indicated in Fig. 3,
- Fig. 5a,b: a third embodiment of an assembly and an internal combustion engine in the area of the cylinder head in schematic cross-sections, and
- Fig. 6: a fourth example embodiment of an assembly and an internal combustion engine in the area of the cylinder head in a schematic cross-section, and
- Fig. 7: another embodiment of the present disclosure.

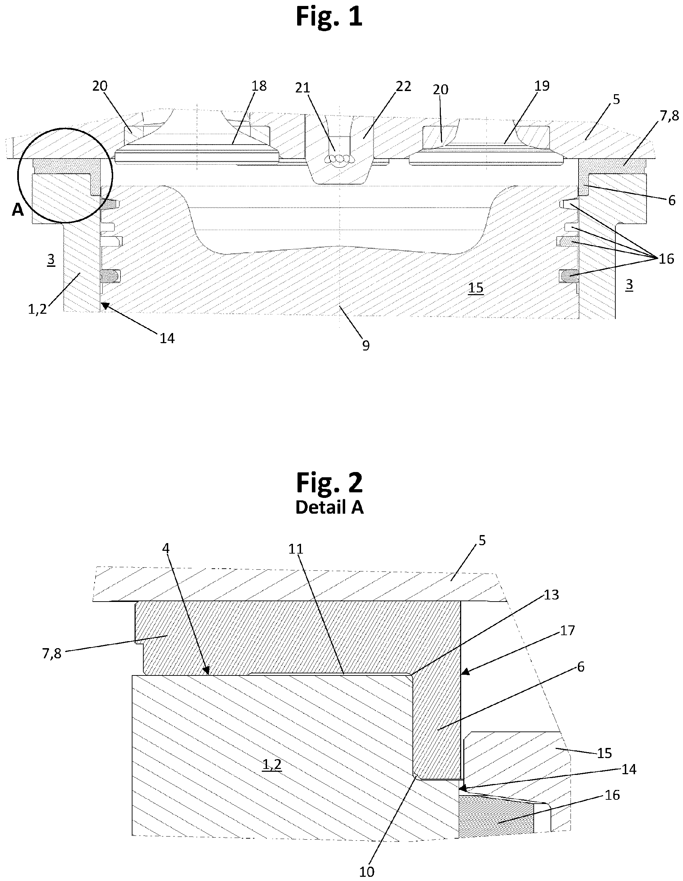

Fig. 1 discloses a first embodiment of an arrangement comprising a chamber component 1, in particular a cylinder liner 2 arranged in a crankcase 3, and a cylinder head 5 according to the present disclosure.

The indicated detail A view of Fig. 1 is shown increased in Fig. 2.

The chamber component 1 or cylinder liner 2 arranged in the crankcase 3 of the internal combustion engine comprises an inner wall 14.

The inner wall 14 extends around a middle axis 9 of the cylinder liner 2 forming the gliding surface for the reciprocating piston 15.

The inner wall 14 of the cylinder liner is formed by turning, wherein the gliding surface can be finished after the turning process by honing.

The piston 15 comprises in this embodiment four piston rings 16 which are in contact with the inner wall 14 of the cylinder liner 2.

The piston 15 shown by the first embodiment of Fig. 1 and Fig. 2 is provided by a piston 15 having a piston bowl.

The cylinder liner 2 comprises an outer wall which is fitted in a cylinder liner bore of a crankcase 3.

At the front face 4 of the cylinder liner 2 (facing a cylinder head 5 in a mounted state of the cylinder liner 1) a recess 10 is provided to receive scraper ring 6.

The scraper ring 6 is pressed into a corresponding recess 10 of the cylinder liner 2, wherein the recess 10 extends from the front face 4 of the cylinder liner 2 by a given length along the longitudinal axis 9 of the cylinder liner 2.

The scraper ring 6 comprises a shoulder 7 extending along the front face 4 of the cylinder liner 3, wherein the shoulder 7 protrudes along the front face 4 of the cylinder liner 3 forming at least a part of a cylinder head gasket 8.

In other words: the scraper ring 6 and the cylinder head gasket 8 are combined in one and the same component part, wherein a gab or crack between two separate components - as known by the state of the art - can be saved.

This saved volumes between the scraper ring 6 and the cylinder head gasket 8 (crevice volume) has been filled by an air-fuel-mixture present in the combustion chamber because of the high pressures during the compression stroke.

During the combustion this crevice volume has not been reached by the ignition, wherein the compressed air-fuel-mixture is not combusted.

During a subsequent decompression (the exhaust stroke) the decompressed air-fuel-mixture is released into the combustion chamber by the exhaust manifold, wherein an increased HC-emission is caused by this crevice volume.

Therefore, by use of an embodiment of a combined scraper ring 6 and the cylinder head gasket 8 the crevice volume can be reduced and therefore also the HC-emission can be reduced.

The shoulder 7 comprises a first clearance 11, wherein the shoulder 7 is at least partially distanced from the front face 4 of the cylinder liner 2 by the first clearance 11 in a region of a transition of the front face 4 into the circumferential recess 10 for the scraper ring 6.

As the scraper ring 6 (being part of the cylinder head gasket 7) is preloaded via the cylinder head 5 against the cylinder liner 2 high loads are obtained especially in the region of transition of the front face 4 into the circumferential recess 10 for the scraper ring 6.

By use of the first clearance 11 these loads can be reduced especially in the region of transition of the front face 4 into the circumferential recess 10 for the scraper ring 6.

The scraper ring 6 comprises a scraper wall 17 having a smaller diameter than the inner wall 14 of the cylinder liner 2.

Furthermore, the embodiment of Fig. 1 and Fig. 2 comprises an inlet valve 18 and an exhaust valve 19 arranged in the cylinder head 5.

The inlet valve 18 as well as the exhaust valve 19 are preloaded against a valve seat 20, wherein the valve seats 20 are provided by separate components placed by a press fit at the cylinder head 5.

Inside the cylinder head 5 furthermore a pre-chamber 21 is provided by a pre-chamber component 22.

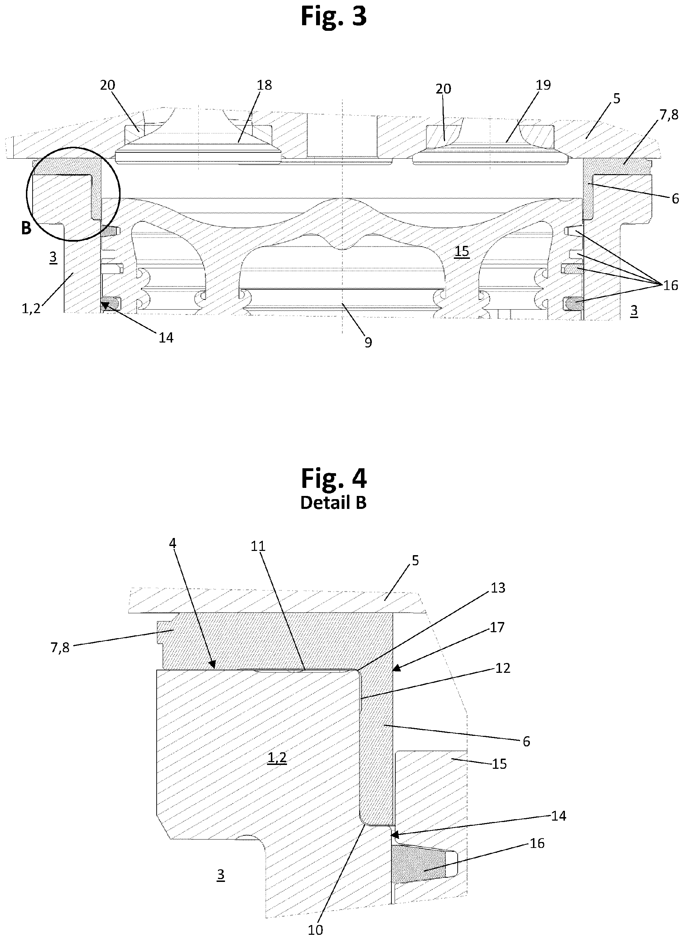

Fig. 3 discloses a second embodiment of an arrangement comprising a chamber component 1, in particular a cylinder liner 2 arranged in a crankcase 3, and a cylinder head 5 according to the present disclosure.

The indicated detail B of Fig. 3 is shown increased in Fig. 4.

The piston 5 shown by the second embodiment of Fig. 3 and Fig. 4 is provided by a piston 15 having a piston bowl in the form of an omega shape.

The cylinder liner 2, the piston 15 and the cylinder head 5 enclose the main combustion chamber 25.

The scraper ring 6 of the second embodiment comprises a second clearance 12, wherein the scraper ring 6 is at least partially distanced from the circumferential recess 10 of the cylinder liner 2 by the second clearance 12 in the region of a transition of the front face 4 into the circumferential recess 10 for the scraper ring 6.

The first clearance 11 transitions directly into the second clearance 12 by a transition radius 13.

By use of the first clearance 11 and the second clearance 12 the edge region of the cylinder liner - in which region the front face 4 passes into the circumferential recess 10 - can be released, wherein high loads acting in this region via the preloaded cylinder head 5 can be significantly reduced.

The remining characteristics which can be seen in the further embodiment shown in Fig. 3 and Fig. 4 essentially comply with the first embodiment shown in Fig. 1 and Fig. 2.

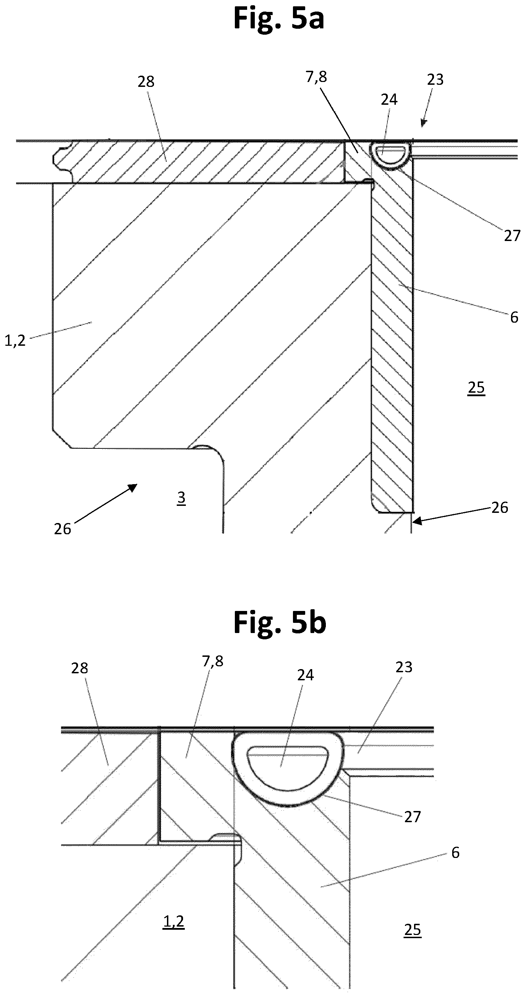

Fig. 5a and Fig 5b disclose another embodiment of an assembly of an internal combustion engine in the area of the cylinder head 5 in schematic cross-sections.

Fig 5b therefore shows a scaled-up detail view of Fig. 5a.

Also in this embodiment the scraper ring 6 and the cylinder head gasket 8 are combined in one and the same component part, wherein a gab or crack between two separate components - as known by the state of the art - can be saved.

As already stated above by such an embodiment by the saved volumes between the scraper ring 6 and the cylinder head gasket 8 (crevice volume) HC-emission can be reduced.

There is a head gasket 23 comprising a cavity 24.

The cylinder head 5 is preloaded against the chamber component 1 - precisely speaking: against the cylinder liner 2 -, wherein cylinder head gasket 8 is clamped between these two components.

The clamping force deforms the head gasket 23 elastically by a large amount such that also the cavity 24 of the head gasket 23 deforms.

Under strong mechanical and thermal loads as well as in the environment with strong vibrations as they occur in the main combustion chamber 25 during operation the head gasket 23 with a cavity can therefore expand more and prevent dead volumes into which fuel can travel.

Unburnt fuel is therefore minimised because said dead volumes do not occur or occur to a lesser degree.

A further gasket - namely a flat gasket 28 - is provided surrounding the cylinder head gasket 8, wherein the flat gasket additionally seals and keeps the distance between the cylinder head 5 and the cylinder liner 2.

The main combustion chamber 25 in this embodiment has a lateral inner wall 14 which is substantially of cylindrical shape.

The head gasket 23 comprising the cavity 24 is in this embodiment made from steel.

The cylinder liner 2 in this embodiment comprises a top stop 26 with which the cylinder liner 2 is clamped into the crankcase 3, e.g., by a clamping action of the cylinder head 5 onto the crankcase 3.

However, the head gasket 23 comprising the cavity 24 according to this disclosure can also be easily implemented together with other concepts such as mid stop liners or bottom stop liners.

In this embodiment the cavity 24 is completely closed.

In other words, the cavity 24 comprised in the head gasket 23 forms a separate volume which is not in fluid communication with the main combustion chamber 25 or the environment or any other separate volumes.

As can be seen (in particular from Fig. 5b) the head gasket 23 has an annular structure.

In this embodiment the cavity 24 is filled with a pressurised gas, namely molecular nitrogen at about 70 bar.

Annular rings with a closed cavity 24 filled with a pressurised gas such as used in this embodiment are sometimes known as Willis Rings.

The head gasket 23 comprising the cavity 24 is in this embodiment arranged on an inner side of the cylinder head gasket 8 or the scraper ring 6 (being combined by on and the same component) facing the main combustion chamber 25.

Furthermore, in this embodiment the head gasket 23 comprising the cavity 24 is part of the lateral inner wall 14 of the main combustion chamber 25.

cylinder head gasket 8 or the scraper ring 6 (being combined by on and the same component) comprises a deepened structure 27, here in the form of a recess or a channel, in which the head gasket 23 comprising the cavity 24 is arranged.

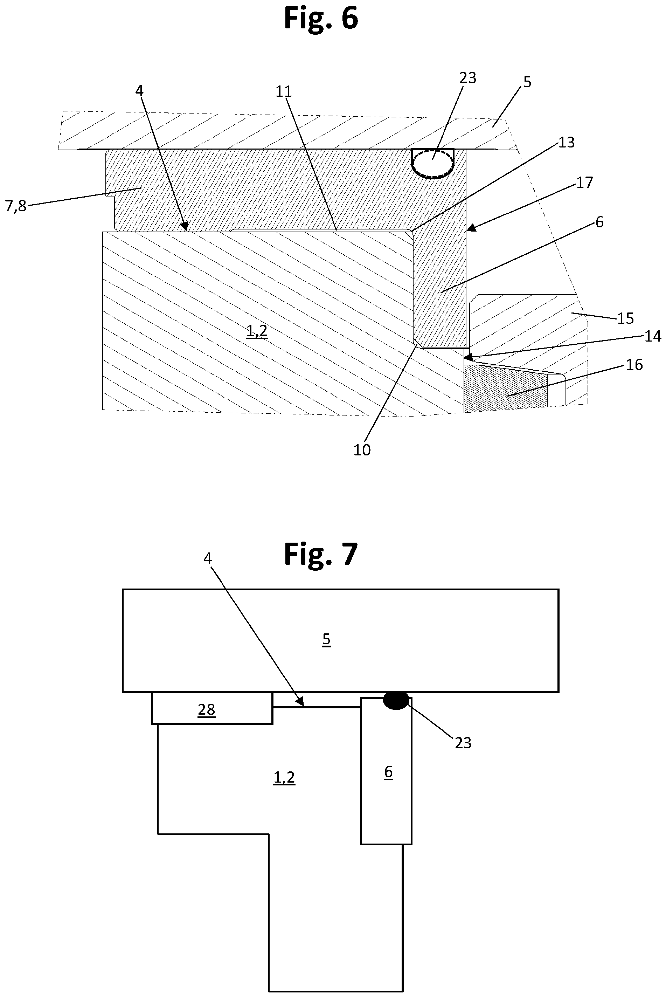

Fig. 6 schematically shows an example embodiment similar to the embodiment of Fig. 5a and 5b.

Instead of the at least one head gasket 23 comprising a cavity 24 there is a head gasket 23 in the form of an elastomeric O-ring shown in a dashed line.

The O-ring depicted in Fig. 6 can preferably be made from FKM and/or FFKM.

In this embodiment the distance of the head gasket 23 in the form of the O-ring from the main combustion chamber 25 is less than half a diameter of the at least one O-ring.

The remaining features of Fig. 5 and 6 essentially correspond to the embodiment disclosed by Fig. 1 or Fig. 3.

Fig. 7 discloses another embodiment of the present disclosure, wherein the scraper ring 6 extends beyond the front face 4 of the chamber component 1 in the direction of the cylinder head 5.

Essentially, the embodiment of Fig. 7 equals the embodiment of Fig. 6 with the difference that the scraper ring 6 of the embodiment of Fig 7 does not comprise a shoulder 7.

However, the scraper ring 6 extends beyond the front face 4 in the direction of the cylinder head 5. Similarly to the other embodiments gaps and crevices in the vicinity of the cylinder head gasket 8 can be minimized in this way in order to reduce emissions of unburnt fuel in the form of hydrocarbons.

### List of used reference signs:

- 1: chamber component
- 2: cylinder liner
- 3: crankcase
- 4: front face
- 5: cylinder head
- 6: scraper ring
- 7: shoulder
- 8: cylinder head gasket
- 9: middle axis
- 10: circumferential recess
- 11: first clearance
- 12: second clearance
- 13: transition radius
- 14: inner wall
- 15: piston
- 16: piston ring
- 17: scraper ring
- 18: inlet valve
- 19: exhaust valve
- 20: valve seat
- 21: pre-chamber
- 22: pre-chamber component
- 23: head gasket
- 24: cavity
- 25: main combustion chamber
- 26: top stop
- 27: deepened structure

## Claims

1. Arrangement for an internal combustion engine comprising a chamber component (1), in particular a cylinder liner (2) and/or a crankcase (3), with a front face (4) of the chamber component (1) facing a cylinder head (5) in a mounted state of the chamber component (1) and a scraper ring (6), **characterized in that** the scraper ring (6) extends beyond the front face (4) of the chamber component (1) in the direction of the cylinder head (5).

2. Arrangement according to claim 1, wherein the scraper ring (6) comprises a shoulder extending along the front face (4) of the chamber component (1), wherein the shoulder (7) protrudes along the front face (4) of the chamber component (1) forming at least a part of a cylinder head gasket (8).

3. Arrangement according to one of the preceding claims, wherein the scraper rind (6) and /or shoulder (7) protrudes from the front face (4) of the chamber component (1) parallel to a middle axis (9) of the chamber component (1) by between 1mm and 10mm, preferably between 2mm to 7mm, particular preferably between 3mm to 6mm.

4. Arrangement according to at least one of the preceding claims, wherein the chamber component (1) comprises a circumferential recess (10) at the front face (4) of the chamber component (1) facing a cylinder head (5) in a mounted state of the chamber component (1), wherein the scraper ring (6) is arranged in the circumferential recess of the chamber component (1).

5. Arrangement at least according to claim 2, wherein the shoulder (7) comprises a first clearance (11), wherein the shoulder (7) is at least partially distanced from the front face (4) of the chamber component (1) by the first clearance (11), preferably in a region of a transition of the front face (4) into the circumferential recess (10) for the scraper ring (6).

6. Arrangement according to claim 4 or 5, wherein the scraper ring (6) comprises a second clearance (12), wherein the scraper ring (6) is at least partially distanced from the circumferential recess (10) of the chamber component (1) by the second clearance (12), preferably in the region of a transition of the front face (4) into the circumferential recess (10) for the scraper ring (6).

7. Arrangement according to claim 5 and 6, wherein the first clearance (11) transitions directly into the second clearance (12) by a transition radius (13), preferably wherein the transition radius is provided by a radius of 0, 5mm to 1mm.

8. Arrangement according to at least one of the claims 5 to 7, wherein the first clearance (11) and/or the second clearance (12) provides a distance between the chamber component (1) and the scraper ring (6) between 0,1mm and 0,3mm, preferably 0,2mm, measured orthogonal to the displaced surfaces.

9. Arrangement according to at least one of the preceding claims, wherein the scraper ring (6) is connected to the chamber component (1), preferably arranged in the circumferential recess (10), with a press fit.

10. Arrangement according to at least one of the preceding claims, wherein the chamber component comprises (1) an inner wall (14) around a middle axis (9) of the chamber component (1) having a diameter forming at least partly a gliding surface for a reciprocating piston (15) with at least one piston ring (16) during operation of the internal combustion engine.

11. Arrangement according to at least one of the preceding claims, wherein the scraper ring (6) comprises a scraper wall (17) having a smaller diameter than the inner wall (14) of the chamber component (1).

12. Arrangement at least according to claim 2, wherein between the shoulder (7) of the scraper ring (6) and the front face (4) of the chamber component (1) at least one sealing element, preferably a gasket and/or an O-ring, is provided.

13. Arrangement according to at least one of the preceding claims, wherein at least one head gasket (23) is provided between the cylinder head gasket (8) and the cylinder head (5), wherein the at least one head gasket (23) comprises a cavity (24), which cavity (24) is closed at least towards a main combustion chamber (25).

14. Arrangement according to claim 13, wherein the cavity (24) is completely closed and/or the at least one head gasket (23) has an annular structure.

15. Arrangement according to claim 13 or 14, wherein a cross-section of the at least one head gasket (23) in an unloaded state is substantially annular and/or a cross-section of the cavity (24) of the at least one head gasket (23) in an unloaded state is substantially circular.

16. Internal combustion engine comprising an arrangement according to at least one of the preceding claims, preferably wherein a piston (15) is arranged inside the chamber component (1) and a cylinder head (5) is preloaded against the chamber component (1) via the scraper ring (6) .
